# EUROPEAN PATENT SPECIFICATION

(11) **EP 4 504 742 B1**
(45) Date of publication and mention of the grant of the patent: **20.05.2026**
(21) Application number: 23719980.7
(22) Date of filing: 30.03.2023
(51) Int. Cl.: C07F 9/53, C08G 77/12, C08G 77/18, C08G 77/20, C08G 77/30, C08G 77/395, C08G 77/50, C08G 77/00, C08K 5/00, C08L 83/04, C08L 83/08

(54) **SILICONE-SOLUBLE ACYLPHOSPHINE OXIDE PHOTOINITIATOR**
SILIKONLÖSLICHER ACYLPHOSPHINOXID-PHOTOINITIATOR
PHOTO-INITIATEUR D'OXYDE D'ACYLPHOSPHINE SOLUBLE DANS DE LA SILICONE

(30) Priority: 06.04.2022 US 202263327990 P
(43) Date of publication of application: 12.02.2025
(73) Proprietor: Dow Global Technologies LLC, Midland, MI 48674 (US); Dow Silicones Corporation, Midland, MI 48686-0994 (US)
(72) Inventor: GRIGG, Robert David, Midland, Michigan 48674 (US); REDDEL, Jordan C., Midland, Michigan 48674 (US); AXTELL, Jonathan, Midland, Michigan 48642 (US); MUKHOPADHYAY, Sukrit, Midland, Michigan 48674 (US); BISWAS, Souvagya, Midland, Michigan 48674 (US); LIU, Junying, Auburn, Michigan 48611 (US)
(74) Representative: Jewell, Catherine Mary
(86) International application number: PCT/US2023/016890
(87) International publication number: WO 2023/196157

(56) References cited:
- WO-A1-2017/120743

## Description

### Background of the Invention

The present invention relates to an acylphosphine oxide photoinitiator. A continuing challenge in the field of organopolysiloxane curing systems is designing a photoinitiator that is compatible with the organopolysiloxane. Photoinitiators with poor compatibility are undesirable as curing agents because they separate from the silicone matrix during storage, resulting in severe haze of the cure product.

US 10,597,413 B2 (Tan) describes an acyl phospine oxide substituted with -CH₂-O-Si(OR)₃ groups, a typical example of which is the following compound:

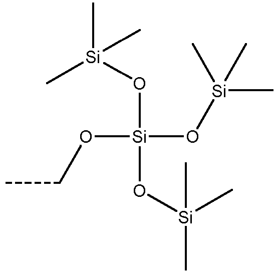

Although Tan discloses that these photoinitiators address a long-standing solubility problem, it is evident that another problem is introduced, namely susceptibility to acid cleavage of the silyl ether bond (CH₂-OSi), thereby rendering the photoinitiator incompatible with the silicone matrix. It would therefore be an advantage in the art of photoinitiation in silicone systems to achieve solubility and with maintenance of stability.

### Summary of the Invention

The present invention addresses a need in the art by providing a compound represented by Formula I: 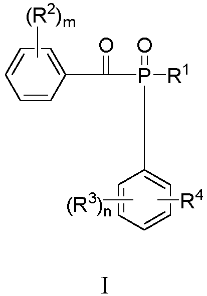
where m is 0, 1, 2, or 3; and n is 0, 1 or 2;
R¹ is -phenyl-(R³)ₙ, -C(O)-phenyl-(R²)ₘ, -O-C₁-C₂₀-alkyl, or -O(CH₂CH₂O)ₓ-H, where x is from 1 to 20;
each R² is independently C₁-C₆-alkyl; C₁-C₆-alkoxy; -OCH₂-phenyl; or R² together with an adjacent R² on the phenyl ring a 1,3-dioxolane group or a 1,4-dioxane group;
each R³ is independently C₁-C₆-alkyl or C₁-C₆-alkoxy;
R⁴ is
   i) -(SiMe₂)ₚ(CH₂)_{q}(Si(R⁵₂)O)ᵣ(X)ₛ-Y; where
      p is 0 or 1 with the proviso that when p is 0, q is 3 to 12, and when p is 1, q is 2 to 12;
      r is from 3 to 300;
      X is CH₂CH₂ or CH(CH₃);
      s is 0 or 1 with the proviso that when s is 0, Y is SiMe₂H, and when s is 1, Y is Si(OMe)₃; SiMe₃; Si(OEt)₃; SiMe₂OMe; SiMe₂OEt; Si(OSiMe₃)₃; SiMe(OSiMe₃)₂; SiMe₂(OSiMe₃); or 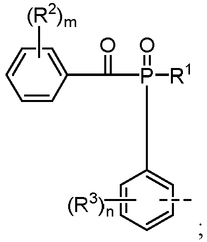
         where the dashed line is the point of attachment from Y to X; and
         each R⁵ is independently C₁-C₆-alkyl or phenyl;
         or R⁴ is
   ii) -(SiMe₂)ₚ(CH₂)ₜ-Z; where
      p is 0 or 1 with the proviso that when p is 0, t is 4 and when p is 1, t is 2; and
      Z is either: 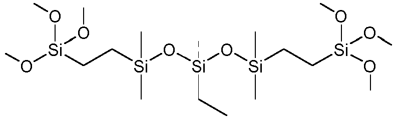 or 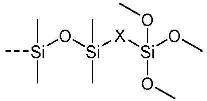 where the dashed line is the point of attachment from Z to (CH₂)ₜ.

### Detailed Description of the Invention

The present invention is a compound represented by Formula I: 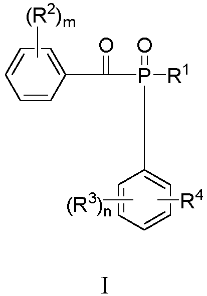
where m is 0, 1, 2, or 3; and n is 0, 1 or 2;
R¹ is -phenyl-(R³)ₙ, -C(O)-phenyl-(R²)ₘ, -O-C₁-C₂₀-alkyl, or -O(CH₂CH₂O)ₓ-H, where x is from 1 to 20;
each R² is independently C₁-C₆-alkyl; C₁-C₆-alkoxy; -OCH₂-phenyl; or R² together with an adjacent R² on the phenyl ring a 1,3-dioxolane group or a 1,4-dioxane group;
each R³ is independently C₁-C₆-alkyl or C₁-C₆-alkoxy;
R⁴ is
   i) -(Si(Me₂)ₚ(CH₂)_{q}(Si(R⁵₂)O)ᵣ(X)ₛ-Y; where
      p is 0 or 1 with the proviso that when p is 0, q is 3 to 12, and when p is 1, q is 2 to 12;
      r is from 3 to 300;
      X is CH₂CH₂ or CH(CH₃);
      s is 0 or 1 with the proviso that when s is 0, Y is SiMe₂H, and when s is 1, Y is Si(OMe)₃; SiMe₃; Si(OEt)₃; SiMe₂OMe; SiMe₂OEt; Si(OSiMe₃)₃; SiMe(OSiMe₃)₂; SiMe₂(OSiMe₃); or 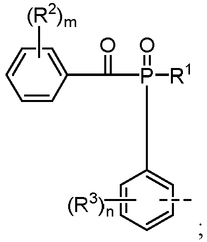
         where the dashed line is the point of attachment from Y to X; and
         each R⁵ is independently C₁-C₆-alkyl or phenyl;
         or R⁴ is
   ii) -(SiMe₂)ₚ(CH₂)ₜ-Z; where
      p is 0 or 1 with the proviso that when p is 0, t is 4 and when p is 1, t is 2; and
      Z is either: 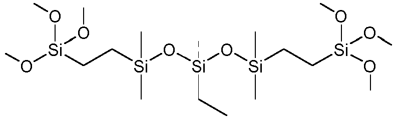 or 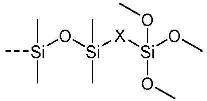 where the dashed line is the point of attachment from Z to (CH₂)ₜ.

In one aspect, R¹ is -C(O)-phenyl-(R²)ₘ. An example of a preferred R¹ group is represented by the following structure:

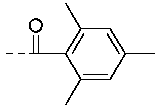

In one aspect, R⁴ is -(SiMe₂)ₚ(CH₂)_{q}(Si(R⁵₂)O)ᵣ(X)ₛ-Y; in another aspect, each R⁵ is methyl. In one aspect, when p is 0, q is 3 or 4; in another aspect, when p is 1, q is 2; r is from 3 or from 6 or from 10, to 300 or to 200 or to 100 or to 50.

The compound of Formula I can be prepared as described in Schemes 1 to 3. Where R¹ is -C(O)-phenyl-(R²)ₘ, and R⁴ is in the para position of benzene ring, the compound of Formula I can be prepared in accordance with Scheme 1. The reaction conditions for each step are described in the experimental section. 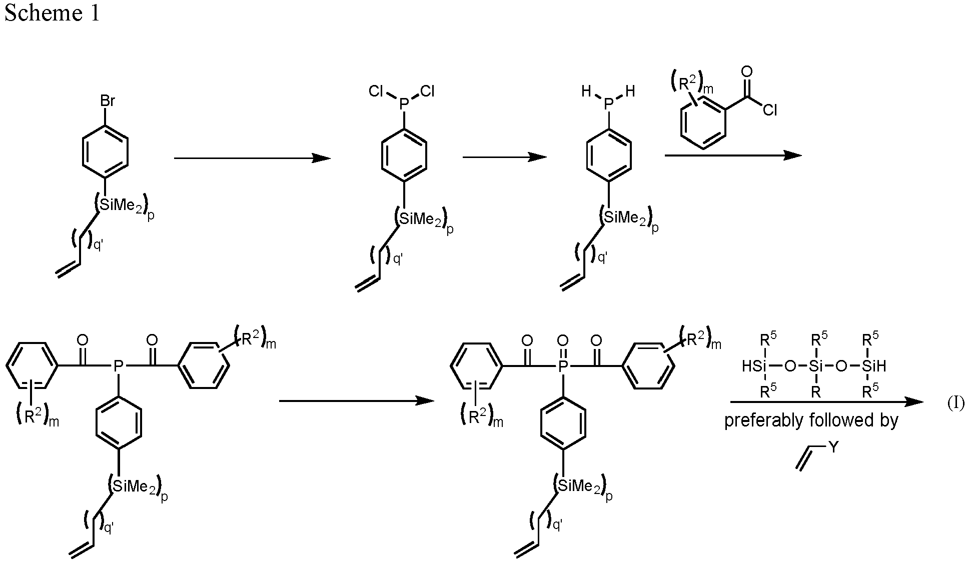 where q' is 1 to 10 when p is 0, and q' is 0 to 10 when p is 1.

Alternatively, where R¹ is -C(O)-phenyl-(R²)ₘ, the compound of the present invention can be prepared by reacting the final Intermediate with either compound A or B: 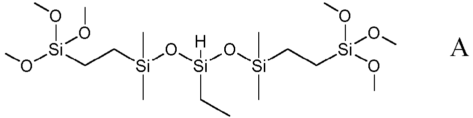 or 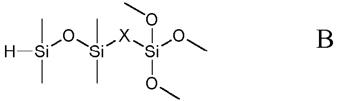 where X is CH₂CH₂ or CH(CH₃).

Where p is 1, the first compound in Scheme 1 can be prepared by contacting in a first step a dibromobenzene, particularly p-dibromobenzene, with a vinyl dimethylsilyl chloride in the presence of n-butyl lithium to form the following intermediate: 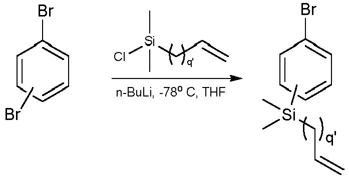 where b is from 0 to 10.

Where p is 0, the first compound, especially where q' is 2, can be prepared as described in Li, Y.-L.; Song, D.-P.; Pan, L.; Ma, Z.; Li, Y.-S. Polym. Chem. 2019, 10, 6368-6378.

Where R¹ is -O-C₁-C₂₀-alkyl, or -O(CH₂CH₂O)ₓ-H, the compound of Formula I can be prepared in accordance with Scheme 2. 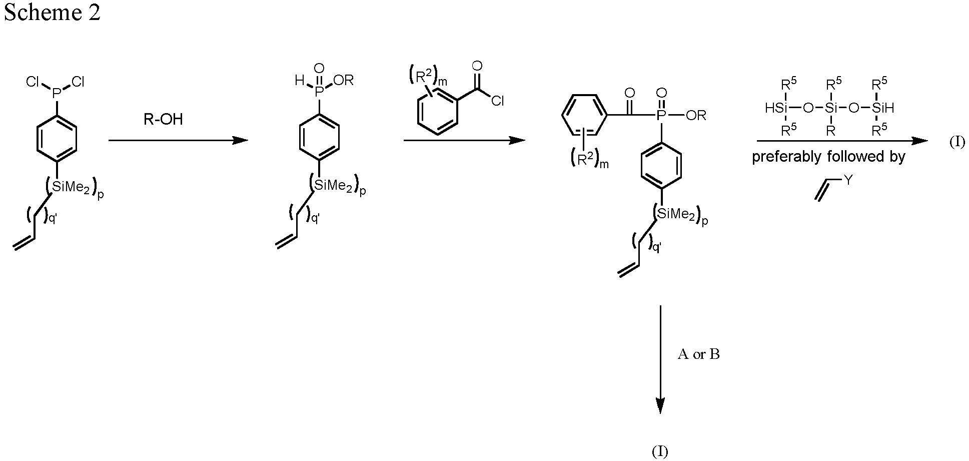 where R is HO-C₁-C₂₀-alkyl, or HO(CH₂CH₂O)ₓ-H.

Where R¹ is -phenyl-(R³)ₙ , the compound of Formula I can be prepared in accordance with Scheme 3.

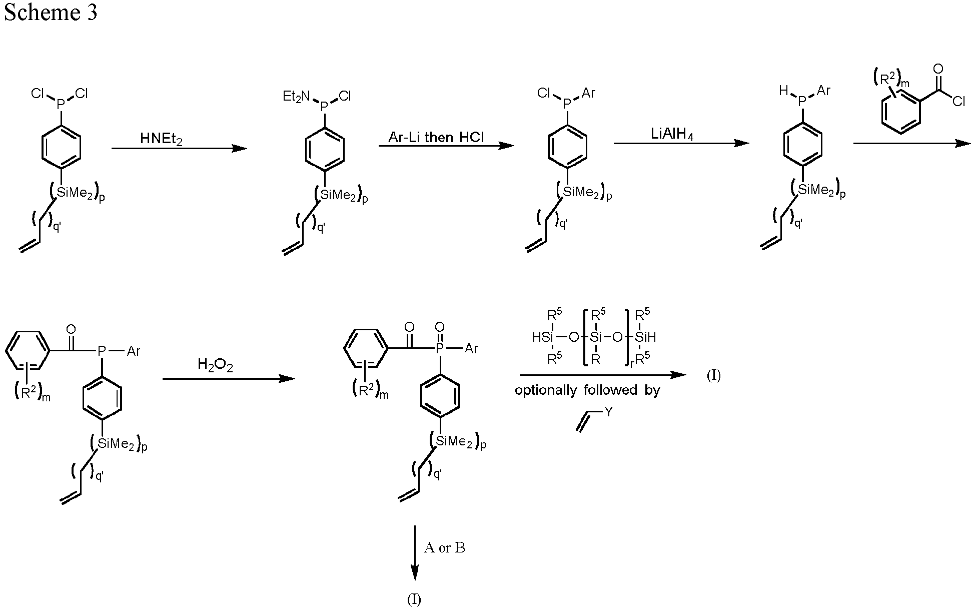

A homogeneous cloud free composition comprising the compound of the present invention and an ethylenically unsaturated organopolysiloxane can be prepared by vigorously mixing the compound with the organopolysiloxane. Examples of suitable ethylenically unsaturated polyorganosiloxanes include diethylenically unsaturated compounds having the following formula: 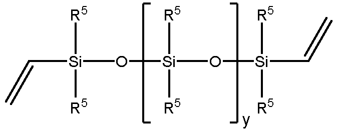 where y is from 10 to 10,000, and R⁵ is as previously defined. Commercially available polyorganosiloxanes include XIAMETER^{™} RBL-9119 Organopolysiloxane and XIAMETER^{™} RBL-9128 Organopolysiloxane (XIAMETER is a Trademark of The Dow Chemical Company or its Affiliates.)

The concentration of photoinitiator core is typically in the range of from 0.1 wt.% or from 0.2 wt.% to 4 wt.% or to 2 wt.%, based on the weight of the composition. As used herein, "photoinitiator core" refers to the following fragment of the compound of the present invention:

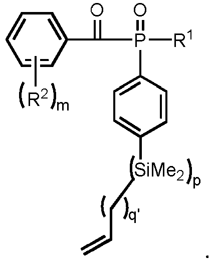

### Examples

### Intermediate Example 1 - Preparation of (4-(But-3-en-1-yl)phenyl)dichlorophosphane

In a glovebox, a 500 mL round bottom flask was charged with 1-bromo-4-(but-3-en-1-yl)benzene (17.1 g), dry THF (118 mL), and dry diethyl ether (37 mL). The flask was sealed and transferred to a fume hood. The mixture was stirred under N₂ and cooled to -78 °C, then n-butyllithium (n-BuLi, 2.5 M in hexane, 34.0 mL) was added dropwise to the mixture. The mixture stirred for 30 min, after which time chlorobis(diethylamino)phosphine (17.9 mL, 85.1 mmol). The mixture stirred for 20 min and was allowed to warm to ambient temperature. The solution was poured into a separatory funnel containing diethyl ether and water. The phases were separated, and the aqueous phase was extracted with a few portions of diethyl ethyl ether. The combined organic fractions were washed with brine, dried over MgSO₄ and concentrated *in vacuo.*

The crude oil was transferred to a 1000-mL round bottom flask, which was placed in a glovebox. The oil was dissolved in dry diethyl ether (100 mL). The mixture was stirred and treated with HCl (2.0 M in diethyl ether, 162 mL, 324 mmol, 4.00 equiv) dropwise, and a white solid precipitated. After 2 h, the slurry was filtered and the filtrate was concentrated. A colorless oil was isolated (15.9 g, 84%), which was used in the next step without further purification.

¹H NMR (500 MHz, C₆D₆) δ 7.63 - 7.40 (m, 2H), 6.86 - 6.76 (m, 2H), 5.62 (ddt, *J =* 18.1, 9.5, 6.6 Hz, 1H), 5.00 - 4.83 (m, 2H), 2.35 (dd, *J* = 8.8, 6.7 Hz, 2H), 2.06 (tdt, *J* = 7.8, 6.5, 1.5 Hz, 2H).

¹³C NMR (126 MHz, C₆D₆) δ 146.99, 137.73 (d, *J =* 51.8 Hz), 137.14, 130.12 (d, *J =* 32.1 Hz), 128.85 (d, *J* = 8.3 Hz), 115.16, 35.02, 34.73.

³¹P NMR (202 MHz, C₆D₆) δ 161.94.

### Intermediate Example 2 - Preparation of (4-(But-3-en-1-yl)phenyl)phosphane

In a glovebox, a 500 mL jar was charged with diethyl ether (100 mL) and LiAlH₄ (2.0 M in THF, 19.8 mL, 39.6 mmol, 0.60 eq.). The solution was stirred vigorously, and Intermediate Example 1 (15.4 g, 66.1 mmol, 1.00 eq.) in diethyl ether (65 mL) was added to the solution dropwise over 10 min. The mixture stirred for 30 min before solid Glauber Salt (25.5 g, 79.3 mmol, 1.20 eq.) was cautiously added. The mixture stirred for 60 min, and the liquid was decanted and filtered through a 0.45 µm syringe filter and concentrated to give a colorless oil (9.73 g, 90%), which was used in the next step without further purification.

¹H NMR (500 MHz, C₆D₆) δ 7.33 - 7.22 (m, 2H), 6.88 - 6.79 (m, 2H), 5.70 (ddt, *J* = 16.9, 10.2, 6.6 Hz, 1H), 5.02 - 4.89 (m, 2H), 3.87 (d, *J* = 198.5 Hz, 2H), 2.44 (dd, *J* = 8.8, 6.7 Hz, 2H), 2.16 (tdt, *J* = 7.9, 6.6, 1.5 Hz, 2H).

¹³C NMR (126 MHz, C₆D₆) δ 141.77, 137.65, 134.92 (d, *J* = 15.7 Hz), 134.19 (dt, *J* = 26.8, 9.8 Hz), 128.56 (d, *J* = 6.2 Hz), 114.84, 35.26, 34.96.

³¹P NMR (202 MHz, C₆D₆) δ -125.28 (tt, *J* = 197.6, 7.3 Hz).

### Intermediate Example 3 - Preparation of ((4-(But-3-en-1-yl)phenyl)phosphoryl)bis(mesitylmethanone)

In a glovebox, a solution of Intermediate Example 2 (9.73 g, 59.3 mmol, 1.00 eq.) in dry THF (300 mL) was treated with sodium tert-butoxide (Na*t*OBu, 11.4 g, 118 mmol, 2.00 eq.), then 2,4,6-trimethylbenzoyl chloride (19.8 mL, 118 mmol, 2.00 eq.) was added dropwise to the mixture. The mixture was stirred overnight. Crude ³¹P NMR spectroscopic analysis indicated that the phosphine was partially consumed. An additional amount of NatOBu (3.99 g) and the benzoyl chloride (6.9 mL) were added to the reaction mixture. After 5 h, the mixture was filtered to remove sodium chloride, and the filtrate was removed from the glovebox and concentrated *in vacuo.* The crude residue was dissolved in dichloromethane (200 mL), and the solution was treated with hydrogen peroxide (6.0 mL 30 wt.%). The mixture was stirred overnight at ambient temperature, then treated with aqueous sodium bisulfite solution (100 mL) and stirred until the organic phase was negative to a peroxide strip test. Phases were separated and concentrated with celite for chromatography on silica gel (0 to 50% EtOAc in hexane). A yellow oil (13 g) that contained product and some other impurities was isolated. A second column purification was performed, whereupon Intermediate Example 3 (11.3 g) was isolated as a yellow oil.

¹H NMR (500 MHz, CDCl₃) δ 7.78 (dd, *J =* 10.1, 8.1 Hz, 2H), 7.23 (dd, *J* = 8.3, 3.0 Hz, 2H), 6.78 (s, 4H), 5.77 (ddt, *J* = 16.0, 10.7, 6.6 Hz, 1H), 5.20 - 4.61 (m, 2H), 2.74 (t, *J* = 7.6 Hz, 2H), 2.39 - 2.32 (m, 2H), 2.25 (s, 6H), 2.14 (s, 12H).

¹³C NMR (126 MHz, CDCl₃) δ 216.37 (d, *J =* 59.9 Hz), 147.41 (d, *J* = 2.9 Hz), 140.92, 137.12, 135.73 (d, *J* = 41.8 Hz), 135.47, 132.19 (d, *J* = 8.3 Hz), 128.93, 128.77 (d, *J* = 11.6 Hz), 122.82 (d, *J =* 78.0 Hz), 115.50, 35.32, 34.93, 21.18, 19.60.

### Intermediate Example 4 - Preparation of (4-Bromophenyl)dimethyl(vinyl)silane

A 1000-mL 3-neck round bottom flask equipped with an addition funnel was charged with dry THF (425 mL) and 1,4-dibromobenzene (20.0 g, 84.8 mmol, 1.00 eq.) under a blanket of N₂. The mixture was stirred at cooled to -78 °C. An *n*-BuLi solution (2.5 M in hexane, 35.6 mL, 89.0 mmol, 1.05 eq.) was added dropwise to the dibromobenzene solution over 25 min. Stirring was continued for another 50 min after the completion of addition of the n-BuLi solution.

Chlorodimethylvinylsilane (12.9 mL, 93.3 mmol, 1.10 equiv) was added dropwise to the reaction mixture with stirring. The mixture was gradually warmed to room temperature over 1 h, after which time the mixture was quenched with aqueous ammonium chloride. Product was extracted with several portions of ethyl acetate. Combined organic fractions were dried over sodium sulfate and concentrated. The crude oil was purified *in vacuo* (450 mTorr, 52-60 °C) to give Intermediate Example 4 (18.75 g) as a colorless oil.

¹H NMR (400 MHz, CDCl₃) δ 7.53 - 7.44 (m, 2H), 7.40 - 7.33 (m, 2H), 6.25 (dd, *J* = 20.2, 14.6 Hz, 1H), 6.06 (dd, *J =* 14.6, 3.8 Hz, 1H), 5.74 (dd, *J* = 20.2, 3.8 Hz, 1H), 0.33 (s, 6H).

¹³C NMR (101 MHz, CDCl₃) δ 137.33, 137.22, 135.42, 133.26, 130.90, 123.83, -3.03.

### Intermediate Example 5 - Preparation of ((4-(Dimethyl(vinyl)silyl)phenyl)phosphoryl)bis(mesitylmethanone)

In a glovebox, a 250-mL round bottom flask was charged with Intermediate Example 4 (4.31 g, 17.9 mmol, 1.00 eq.), dry THF (26 mL), and dry diethyl ether (8 mL). The flask was sealed and transferred to a fume hood. The mixture was stirred under nitrogen and cooled to -78 °C. whereupon *n*-BuLi (2.5 M in hexane, 7.51 mL, 18.8 mmol, 1.05 eq.) was added dropwise. The mixture stirred for 30 min, after which time chlorobis(diisopropylamino)phosphine (5.01 g, 18.8 mmol, 1.05 eq.) was added as a solid. The mixture was stirred and allowed to warm to ambient temperature over 2 h. The solution was poured into a separatory funnel containing diethyl ether and water. The phases were separated, and the aqueous phase was extracted with a few portions of diethyl ethyl ether. The combined organic fractions were washed with brine, dried with MgSO₄ and concentrated by rotary evaporation.

The crude oil was transferred to a 250-mL round bottom flask, which was placed in a glovebox. The oil was dissolved in dry diethyl ether (20 mL). The flask was sealed and transferred to a fume hood. The mixture was stirred and cooled to 0 °C under N₂. HCl (2.0 M in diethyl ether, 35.7 mL, 71.5 mmol, 4.00 eq.) was then added dropwise and a white solid precipitated. After continued stirring for 2 h, the slurry was filtered and the filtrate concentrated. The crude residue was mixed with diethyl ether and hexane and filtered again. The filtrate was concentrated to give a colorless oil (4.59 g). The crude material was used in the next step without further purification.

In a glovebox, a 150-mL jar was charged under vigorous stirring with diethyl ether (44 mL) and LiAlH₄ (2.0 M in THF, 5.23 mL, 10.5 mmol, 0.60 eq.). The crude material from the previous step (4.59 g, 17.4 mmol, 1.00 equiv) was added to the LiAlH₄ solution dropwise over 5 min. The mixture stirred for 30 min, after which time solid Glauber Salt (6.74 g, 20.9 mmol, 1.20 eq.) was cautiously added. Stirring continued for 14 h, after which time the solution was filtered and the filtrate concentrated to give 2.71 g of crude product as a colorless oil. The crude material was used in the next step without further purification.

A solution of the crude material from the previous step (2.71 g) in dry THF (70 mL) was treated with dry NatOBu (2.68 g, 27.9 mmol, 2.00 eq.), followed by dropwise addition of 2,4,6-trimethylbenzoyl chloride (4.65 mL, 27.9 mmol, 2.00 eq.). The mixture stirred for 3 h and the mixture was then filtered to remove sodium chloride.

The filtrate was removed from the glovebox and concentrated *in vacuo.* The crude residue was dissolved in dichloromethane (50 mL), and the solution was treated with hydrogen peroxide (1.4 mL, 30 wt.%). The mixture was stirred overnight at ambient temperature, then treated with aqueous sodium bisulfite solution (30 mL). Phases were separated and the organic phase was concentrated in the presence of silica gel to facilitate liquid chromatography on silica gel (0 to 50% EtOAc in hexane). Intermediate Example 5 (1.98 g) was isolated as a yellow oil that solidified upon standing.

¹H NMR (500 MHz, CDCl₃) δ 7.90 - 7.79 (m, 2H), 7.56 (dd, *J* = 8.0, 3.3 Hz, 2H), 6.78 (s, 4H), 6.24 (dd, *J =* 20.2, 14.7 Hz, 1H), 6.07 (dd, *J* = 14.6, 3.6 Hz, 1H), 5.71 (dd, *J =* 20.3, 3.7 Hz, 1H), 2.25 (s, 6H), 2.14 (s, 12H), 0.35 (s, 6H).

¹³C NMR (126 MHz, CDCl₃) δ 215.87 (d, *J* = 58.9 Hz), 144.76 (d, *J* = 2.5 Hz), 140.99, 136.91, 135.84, 135.52, 133.67 (d, *J* = 10.8 Hz), 133.55, 131.01 (d, *J* = 7.6 Hz), 128.95, 126.27 (d, *J =* 75.6 Hz), 21.18, 19.64, -3.17.

³¹P NMR (202 MHz, CDCl₃) δ 7.19 (t, *J* = 10.6 Hz).

In the following examples, M'DᵣM' Polysiloxane refers to H-Si(Me₂)O[Si(Me₂)O]ᵣ-Si(Me₂)-H.

### Example 1 - Preparation of M'D₃₈M' Polysiloxane Substituted Photoinitiator

Intermediate Example 3 (0.07 g) was mixed with dry hexane (3.0 mL) and M'D₃₈M' Polysiloxane (1.72 g) in a glovebox. The mixture was stirred at 50 °C until the solids dissolved. Karstedt's Catalyst (2 wt% Pt in xylene, 0.03 mL) was added and the mixture was stirred overnight. Consumption of the alkene was monitored by ¹H NMR spectroscopy, and additional portions of Karstedt's Catalyst were added until <5% of the alkene remained. Vinyl trimethoxysilane was added to react with remaining Si-H groups.

Volatiles were removed by vacuum pump, leaving an amber oil. The mixture of products was calculated to comprise 4.0 wt% photoinitiator.

### Example 2 - Preparation of M'D₇M' Polysiloxane Substituted Photoinitiator

The procedure described in Example 1 was followed except that M'D₇M' Polysiloxane (0.55 g) was used. The mixture of products was calculated to comprise 15.3 wt% photoinitiator.

### Example 3 - Preparation of M'D₁₄M' Polysiloxane Substituted Photoinitiator

The procedure described in Example 1 was followed except that M'D₁₄M' Polysiloxane (0.99 g) was used. The mixture of products was calculated to comprise 9.1 wt% photoinitiator.

The following products and byproducts were identified in Examples 1 to 3:

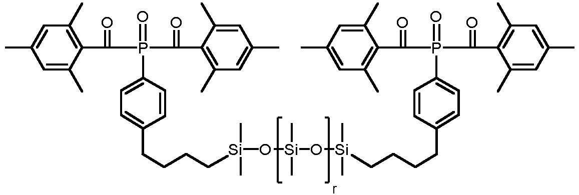

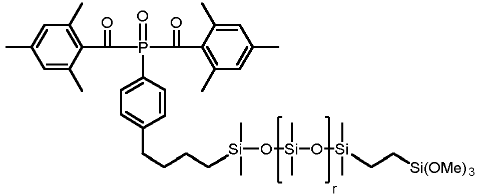

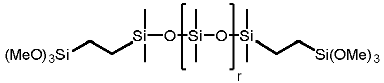

### Example 4 - Preparation of M'D₃₈M' Polysiloxane Substituted Photoinitiator

Intermediate Example 5 (0.10 g) was mixed with dry toluene (1.5 mL) and M'D₃₈M' Polysiloxane (0.60 g) in a glovebox. The mixture was stirred at 80 °C until the solids dissolved. Karstedt's Catalyst (2 wt% Pt in xylene, 0.012 mL) was added to the mixture and stirring was continued for 1 h. Consumption of the alkene was monitored by ¹H NMR spectroscopy, and additional portions of Karstedt's Catalyst were added until <5% of the alkene remained. Vinyl trimethoxysilane was added to react with remaining Si-H groups. Volatiles were removed *in vacuo* leaving an amber oil. The mixture of products was calculated to comprise 14.5 wt% photoinitiator.

### Example 5 - Preparation of M'D₇M' Polysiloxane Substituted Photoinitiator

The procedure described in Example 4 was followed except that M'D₇M' Polysiloxane (0.14 g) was used. The mixture of products was calculated to comprise 43.5 wt% photoinitiator.

### Example 6 - Preparation of M'D₁₄M' Polysiloxane Substituted Photoinitiator

The procedure described in Example 4 was followed except that M'D₁₄M' Polysiloxane (0.24 g) was used. The mixture of products was calculated to comprise 30.0 wt% photoinitiator. The following products and byproduct were identified for Examples 4 to 6:

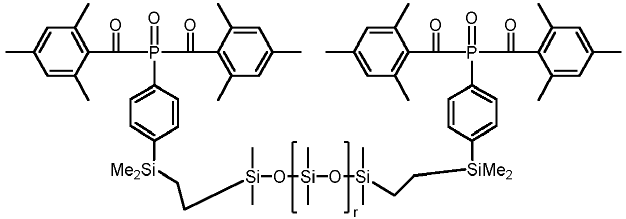

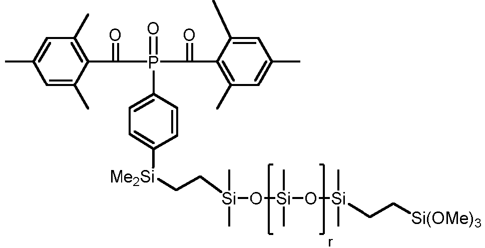

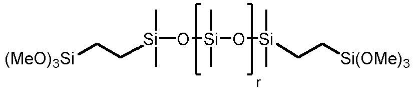

### Example 7 - Preparation of Photoinitiator Substituted with Compound A

Intermediate Example 5 (0.11 g) was mixed with stirring with dry toluene (1.5 mL) in a glovebox at 80 °C until the solids dissolved. Compound A (0.19 mL) was added to the mixture along with Karstedt's catalyst (2 wt.% Pt in xylene, 0.06 mL) and the mixture as stirred for 1 h. Consumption of Intermediate Example 5 was monitored by ¹H NMR spectroscopy; additional catalyst was added until < 5 wt.% of the starting material remained. Then, an excess of vinyl trimethoxysilane was added and stirring was continued until the Si-H functional group was fully consumed. The volatiles were removed *in vacuo* leaving an amber oil. The product was calculated to comprise 18 wt% photoinitiator. The following product was identified.

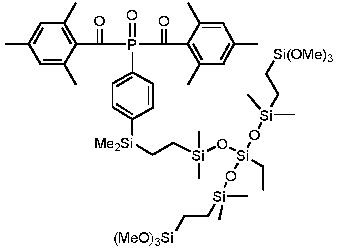

### Example 8 - Preparation of Photoinitiator Substituted with Compound B

The procedure described in Example 7 was followed except that Compound B (0.10 mL) was used. The product was calculated to comprise 20 wt% photoinitiator. The following products were identified.

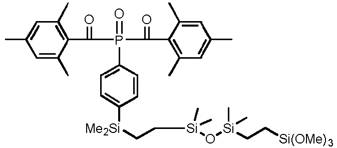

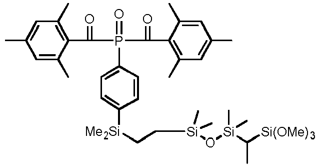

### Example 9 - Preparation of Photoinitiator Substituted with Compound A

Intermediate Example 3 (0.14 g) was mixed with stirring with dry hexane (3.0 mL) and dry toluene (1.5 mL) in a glovebox at 50 °C until the solids dissolved. Compound A (1.03 mL) was added to the mixture along with Karstedt's catalyst (2 wt.% Pt in xylene, 0.06 mL) and the mixture as stirred for 1 h. Consumption of Intermediate Example 3 was monitored by ¹H NMR spectroscopy; additional catalyst was added until < 5 wt.% of the starting material remained. Then, an excess of vinyl trimethoxysilane was added and stirring was continued until the Si-H functional group was fully consumed. The volatiles were removed *in vacuo* leaving an amber oil. The product was calculated to comprise 18 wt% photoinitiator. The following product was identified.

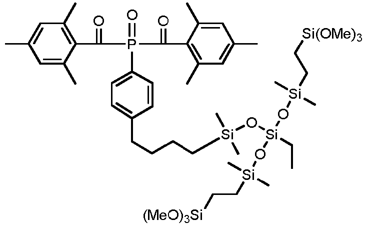

### Photoinitiator Composition Preparation

Each of the compounds prepared in Examples 1-9 were mixed with sufficient XIAMETER^{™} RBL-9119 Organopolysiloxane to form a 0.5 wt.% mixture with respect to the photoiniator core. The compositions were visually inspected for homogeneity. No samples were observed to contain solid particles or phase-separated oil droplets; therefore, all were found to be homogenous.

After visual inspection for homogeneity, each vial was placed in a robotic imaging station. A picture was taken at ambient temperature to measure the clarity of the phase. The clarity of the phase was determined by subtracting the image background, cropping the image, thresholding the pixel intensity using Otsu thresholding, and computing the average intensity over the remaining pixels; pixel intensity (phase clarity) was reported as a value between 0 (clear) to 255 (opaque). A pixel intensity of < 120 was considered a passing clarity.

**Table 1 shows clarity data for the photoinitiator compositions.**

| Ex. No. | Wt% Photoinitiator | Largest Phase Clarity (0-255) |
|---|---|---|
| Example 1 | 0.5% | 47 |
| Example 2 | 0.5% | 73 |
| Example 3 | 0.5% | 54 |
| Example 4 | 0.5% | 45 |
| Example 5 | 0.5% | 55 |
| Example 6 | 0.5% | 39 |
| Example 7 | 0.5% | 48 |
| Example 8 | 0.5% | 24 |
| Example 9 | 0.5% | 50 |

The compositions prepared from the photoinitiator compounds and the photocurable organopolysiloxane were found to meet the criteria of homogeneity, clarity, and stability against decomposition.

## Claims

1. A compound represented by Formula I: 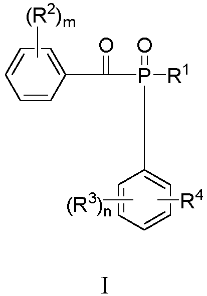
where m is 0, 1, 2, or 3; and n is 0, 1 or 2;
R¹ is -phenyl-(R³)ₙ, -C(O)-phenyl-(R²)ₘ, -O-C₁-C₂₀-alkyl, or -O(CH₂CH₂O)ₓ-H, where x is from 1 to 20;
each R² is independently C₁-C₆-alkyl; C₁-C₆-alkoxy; -OCH₂-phenyl; or R² together with an adjacent R² on the phenyl ring a 1,3-dioxolane group or a 1,4-dioxane group;
each R³ is independently C₁-C₆-alkyl or C₁-C₆-alkoxy;
R⁴ is
i) -(SiMe₂)ₚ(CH₂)_{q}(Si(R⁵₂)O)ᵣ(X)ₛ-Y; where
p is 0 or 1 with the proviso that when p is 0, q is 3 to 12, and when p is 1, q is 2 to 12; r is from 3 to 300;
X is CH₂CH₂ or CH(CH₃);
s is 0 or 1 with the proviso that when s is 0, Y is SiMe₂H, and when s is 1, Y is Si(OMe)₃; SiMe₃; Si(OEt)₃; SiMe₂OMe; SiMe₂OEt; Si(OSiMe₃)₃; SiMe(OSiMe₃)₂; SiMe₂(OSiMe₃); or 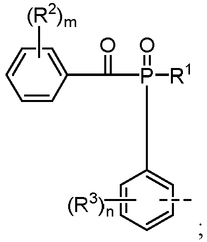
where the dashed line is the point of attachment from Y to X; and
each R⁵ is independently C₁-C₆-alkyl or phenyl;
or R⁴ is
ii) -(SiMe₂)ₚ(CH₂)ₜ-Z; where
p is 0 or 1 with the proviso that when p is 0, t is 4 and when p is 1, t is 2; and
Z is either: 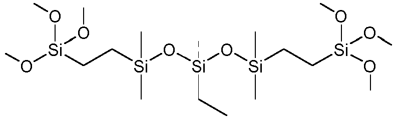 or 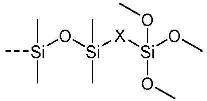 where the dashed line is the point of attachment from Z to (CH₂)ₜ.

2. The compound of Claim 1 where each R⁵ is methyl.

3. The compound of Claim 2 where R¹ is -C(O)-phenyl-(R²)ₘ; R⁴ is
-(SiMe₂)ₚ(CH₂)_{q}(Si(Me₂)O)ᵣ(X)ₛ-Y; where r is from 6 to 200; and s is 1.

4. The compound of Claim 3 where n is 0, p is 1, q is 2, r is from 6 to 50, and Y is Si(OMe)₃.

5. The compound of Claim 4 where m is 3, each R² is methyl, and R¹ is represented by the following fragment:

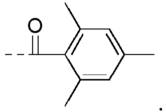

6. The compound of Claim 1 where R¹ is -C(O)-phenyl-(R²)ₘ; and Z is either 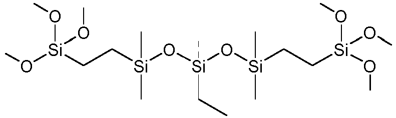 or

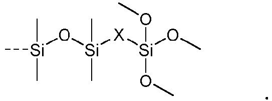

7. The compound of Claim 5 where n is 0, m is 3, each R² is methyl, and each R⁵ is methyl.

8. A composition comprising a solution of the compound of Formula I of Claim 1 and an ethylenically unsaturated organopolysiloxane.

9. The composition of Claim 8 wherein the ethylenically unsaturated organopolysiloxane is represented by the following structure: 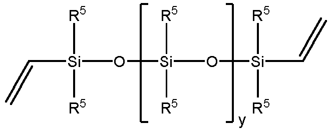 where y is from 10 to 10,000, and each R⁵ is independently C₁-C₆-alkyl or phenyl.

10. The composition of Claim 9 where each R⁵ is methyl.

## Patentansprüche

1. Verbindung, die durch Formel I dargestellt ist: 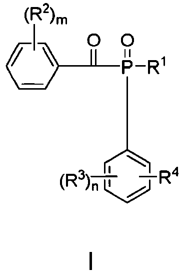
wobei m 0, 1, 2 oder 3 ist; und n 0, 1 oder 2 ist;
R¹ -Phenyl-(R³)ₙ, -C(O)-Phenyl-(R²)ₘ, -O-C₁-C₂₀-Alkyl oder -O(CH₂CH₂O)_{X}-H ist, wobei x von 1 bis 20 ist;
jedes R² unabhängig C₁-C₆-Alkyl; C₁-C₆-Alkoxy; -OCH₂-Phenyl; oder R² zusammen mit einem benachbarten R² an dem Phenylring eine 1,3-Dioxolan-Gruppe oder eine 1,4-Dioxan-Gruppe ist;
jedes R³ unabhängig C₁-C₆-Alkyl oder C₁-C₆-Alkoxy ist;
R⁴ i) -(SiMe₂)ₚ(CH₂)_{q}(Si(R⁵₂)O)ᵣ(X)ₛ-Y ist;
wobei
p 0 oder 1 ist, mit der Maßgabe, dass wenn p 0 ist, q 3 bis 12 ist und wenn p 1 ist, q 2 bis 12 ist;
r von 3 bis 300 ist;
X CH₂CH₂ oder CH(CH₃) ist;
s 0 oder 1 ist, mit der Maßgabe, dass wenn s 0 ist, Y SiMe₂H ist und wenn s 1 ist, Y ist Si(OMe)₃; SiMe₃; Si(OEt)₃; SiMe₂OMe; SiMe₂OEt; Si(OSiMe₃)₃; SiMe(OSiMe₃)₂;
SiMe₂(OSiMe₃); oder 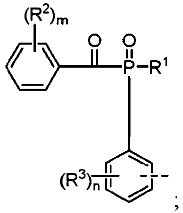
wobei die gestrichelte Linie der Anschlusspunkt von Y zu X ist; und
jedes R⁵ unabhängig C₁-C₆-Alkyl oder Phenyl ist;
oder R⁴ ii) -(SiMe₂)_{P}(CH₂)ₜ-Z ist;
wobei
p 0 oder 1 ist, mit der Maßgabe, dass wenn p 0 ist, t 4 ist und wenn p 1 ist, t 2 ist; und Z entweder ist: 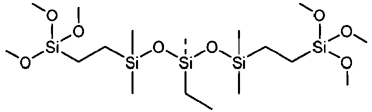
oder 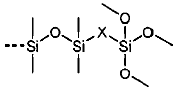
wobei die gestrichelte Linie der Anschlusspunkt von Z zu (CH₂)ₜ ist.

2. Verbindung nach Anspruch 1, wobei jedes R⁵ Methyl ist.

3. Verbindung nach Anspruch 2, wobei R¹ -C(O)-Phenyl-(R²)ₘ ist; R⁴ - (SiMe₂)ₚ(CH₂)_{q}(Si(Me₂)O)ᵣ(X)ₛ-Y ist; wobei r von 6 bis 200 ist; und s 1 ist.

4. Verbindung nach Anspruch 3, wobei n 0 ist, p 1 ist, q 2 ist, r von 6 bis 50 ist und Y Si(OMe)₃ ist.

5. Verbindung nach Anspruch 4, wobei m 3 ist, jedes R² Methyl ist und R¹ durch das folgende Fragment dargestellt ist:

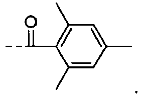

6. Verbindung nach Anspruch 1, wobei R¹ -C(O)-Phenyl-(R²)ₘ ist; und Z entweder ist 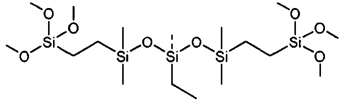 oder

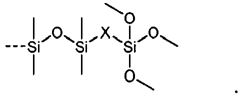

7. Verbindung nach Anspruch 5, wobei n 0 ist, m 3 ist, jedes R² Methyl ist und jedes R⁵ Methyl ist.

8. Zusammensetzung, umfassend eine Lösung der Verbindung von Formel I von Anspruch 1 und ein ethylenisch ungesättigtes Organopolysiloxan.

9. Zusammensetzung nach Anspruch 8, wobei das ethylenisch ungesättigte Organopolysiloxan durch die folgende Struktur dargestellt ist: 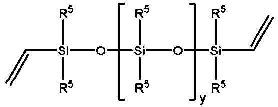 wobei y von 10 bis 10.000 ist und jedes R⁵ unabhängig C₁-C₆-Alkyl oder Phenyl ist.

10. Zusammensetzung nach Anspruch 9, wobei jedes R⁵ Methyl ist.

## Revendications

1. Composé représenté par la Formule I : 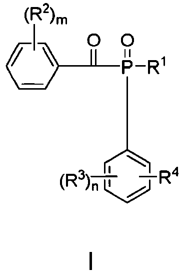
où m vaut indépendamment 0, 1, 2, ou 3 ; et n vaut 0, 1 ou 2 ;
R¹ est -phényl-(R³)ₙ, -C(O)-phényl-(R²)ₘ, -O-alkyle en C₁-C₂₀, ou - O(CH₂CH₂O)ₓ-H, où x va de 1 à 20 ;
chaque R² est indépendamment alkyle en C₁-C₆ ; alcoxy en C₁-C₆ ; - OCH₂-phényle ; ou R², conjointement avec un R² adjacent sur le cycle phényle, un groupe 1,3-dioxolane ou un groupe 1,4-dioxane ;
chaque R³ est indépendamment alkyle en C₁-C₆, ou alcoxy en C₁-C₆ ;
R⁴ est
i) -(SiMe₂)ₚ(CH₂)_{q}(Si(R⁵₂)O)ᵣ(X)ₛ-Y ; où
p vaut 0 ou 1 à condition que, lorsque p vaut 0, q vaille de 3 à 12, et lorsque p vaut 1, q vaille de 2 à 12 ;
r va de 3 à 300 ;
X est CH₂CH₂ ou CH(CH₃) ;
s vaut 0 ou 1 à condition que, lorsque s vaut 0, Y soit SiMe₂H, et lorsque s vaut 1, Y soit Si(OMe)₃ ; SiMe₃ ; Si(OEt)₃ ; SiMe₂OMe ; SiMe₂OEt ; Si(OSiMe₃)₃ ; SiMe(OSiMe₃)₂ ; SiMe₂(OSiMe₃) ; ou 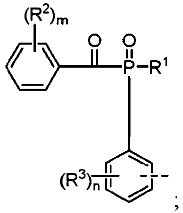
où la ligne en pointillés est le point d'attache de Y à X ; et
chaque R⁵ est indépendamment alkyle en C₁-C₆ ou phényle ;
ou R⁴ est
ii) -(SiMe₂)_{P}(CH₂)ₜ-Z ; où
p vaut 0 ou 1 à condition que, lorsque p vaut 0, t vaille 4 et lorsque p vaut 1, t vaille 2 ; et
Z est soit : 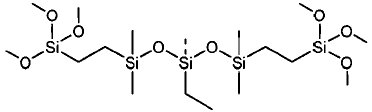
soit 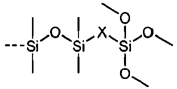
où la ligne en pointillés est le point d'attache de Z à (CH₂)ₜ.

2. Composé selon la revendication 1, où chaque R⁵ est méthyle.

3. Composé selon la revendication 2, dans lequel R¹ est -C(O)-phényl-(R²)ₘ ; R⁴ est -(SiMe₂)ₚ(CH₂)_{q}(Si(Me₂)O)ᵣ(X)ₛ-Y ; où r va de 6 à 200 ; et s vaut 1.

4. Composé selon la revendication 3, où n vaut 0, p vaut 1, q vaut 2, r va de 6 à 50, et Y est Si(OMe)₃.

5. Composé selon la revendication 4, où m vaut 3, chaque R² est méthyle, et R¹ est représenté par le fragment suivant :

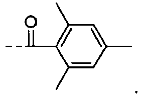

6. Composé selon la revendication 1, où R¹ est -C(O)-phényl-(R²)ₘ ; et Z est soit 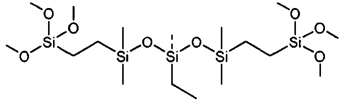 soit

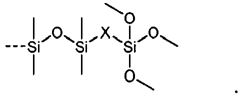

7. Composé selon la revendication 5, où n vaut 0, m vaut 3, chaque R² est méthyle, et chaque R⁵ est méthyle.

8. Composition comprenant une solution du composé de Formule I selon la revendication 1 et un organopolysiloxane à insaturation éthylénique.

9. Composition selon la revendication 8, dans laquelle l'organopolysiloxane à insaturation éthylénique est représenté par la formule suivante : 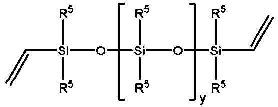 où y va de 10 à 10 000, et chaque R⁵ est indépendamment alkyle en C₁-C₆ ou phényle.

10. Composition selon la revendication 9, où chaque R⁵ est méthyle.
